# EUROPÄISCHE PATENTSCHRIFT

(11) **EP 3 431 743 B1**
(45) Veröffentlichungstag und Bekanntmachung des Hinweises auf die Patenterteilung: **30.08.2023**
(21) Anmeldenummer: 18184622.1
(22) Anmeldetag: 20.07.2018
(51) Int. Cl.: F02D 41/06, F02D 41/00, F02M 21/02, F02D 19/02, F02D 9/02

(54) **VERFAHREN UND VORRICHTUNG ZUM BETREIBEN EINES GASMOTORS BEI BETRIEB MIT NIEDRIGER LEISTUNG**
METHOD AND APPARATUS FOR OPERATING A GAS ENGINE AT LOW POWER OPERATION
PROCÉDÉ ET DISPOSITIF DE FONCTIONNEMENT D'UN MOTEUR À GAZ LORS DU FONCTIONNEMENT À FAIBLE PUISSANCE

(30) Priorität: 20.07.2017 DE 102017116402
(43) Veröffentlichungstag der Anmeldung: 23.01.2019
(73) Patentinhaber: Geisberger, Maximilian, 84419 Schwindegg (DE)
(72) Erfinder: Geisberger, Maximilian, 84419 Schwindegg (DE); Eichhorn, Sebastian, 83624 Otterfing (DE)
(74) Vertreter: Flügel Preissner Schober Seidel

(56) Entgegenhaltungen:
- EP-A2- 0 812 980
- DE-A1- 4 419 429
- DE-A1-102017 100 976
- JP-A- S6 198 955
- JP-A- 2009 062 936
- US-A- 5 337 722
- US-A1- 2011 077 847
- US-A1- 2011 308 500
- US-B1- 6 371 092

## Beschreibung

Die Erfindung betrifft ein Verfahren zum Regeln eines Gasmotors bei Betrieb mit niedriger Leistung sowie eine entsprechende Vorrichtung zum Betreiben eines Gasmotors mit niedriger Leistung, insbesondere in der Startphase.

Gasmotoren finden beispielsweise Anwendung für Stromaggregate zur Einspeisung von Energie in ein elektrisches Energieversorgungsnetz. Durch den Gasmotor wird die chemische Energie eines Brennstoffes, insbesondere eines Gases wie beispielsweise Biogas, Holzgas, Grubengas, Erdgas oder Propan, in kinetische Energie umgewandelt, mit der dann ein Generator angetrieben wird. Der Generator wandelt die kinetische Energie in elektrische Energie um, welche in das Energieversorgungsnetz eingespeist wird.

Für den Betrieb eines Gasmotors ist es bekannt, durch eine Gasleitung gasförmigen Brennstoff, beispielsweise Biogas, Holzgas, Grubengas, Erdgas oder Propan, nachstehend als Gas bezeichnet, nach der Durchmischung mit Frischluft dem Ansaugorgan (Ansaugkrümmer) des Motors zuzuführen. Die Verbrennung in den Zylindern des Motors erfolgt nach dem Ottoverfahren. Der Gasvolumenstrom wird auf einen Sollwert des Restsauerstoffgehaltes des Abgases, der über eine Lambdasonde gemessen wird, durch Drosselung geregelt. In dem Gasmischer wird das zugeführte Gas mit Frischluft gemischt, so dass beim Betrieb des Motors ein optimales Gasgemisch bereitgestellt wird. Dies führt im Allgemeinen zu einem störungsfreien Verbrennungsprozess in den Zylindern des Gasmotors. Dies gilt vor allem dann, wenn der Startvorgang des Gasmotors abgeschlossen ist, da dann am Gasmischer entsprechende Massenströme aus Gas und Luft vorhanden sind.

Allerdings erweist sich der Startvorgang des Gasmotors als schwierig, weil beim Starten mit Anlasser der Gasmotor nur eine verhältnismäßig niedrige Drehzahl von etwa 150 bis 200 Umdrehungen pro Minute erreichen kann, so dass das Mischverhältnis Luft/Gas schwierig einzustellen ist. Durch die Eigenheiten der Initialzündung muss die Genauigkeit des Mischverhältnisses zwischen Luft und Brenngas hier überdies besonders präzise sein.

Zusätzlich ist ein stationärer Betrieb bei niedriger Leistung durch den schnellen Leistungsregler und den langsamen Lambdaregler, die voneinander unabhängig regeln, teilweise schwierig.

Der Abstract zu CN 102 374 074 A offenbart die Verwendung einer Bypass-Regelstrecke zum Starten eines Gasmotors. Diese zweigt vor einem Gasregelventil von der Luftzuführleitung ab und mündet hinter dem Gasregelventil und vor einem Gasmischer wieder in die Luftzuführleitung.

Aus DE 10 2008 019 225 A1 ist ein Verfahren zum Kaltstart eines Gasmotors bekannt, bei dem für den Startvorgang ein Hilfskraftstoff eingespritzt wird.

DE 10 2014 006 019 A1 offenbart, dass ein mittels Turbolader aufgeladener Gasmotor in der Phase des Startens als Saugmotor arbeitet. Während des Startens wird ein Gas-Luft-Gemisch den Zylindern des Gasmotors über eine Bypassleitung, die an den Turboladern vorbeigeführt ist, zugeführt.

Auch AT 517 119 A1 offenbart, dass ein mittels Turbolader aufgeladener Gasmotor in der Startphase als Saugmotor arbeitet. Die Saugwirkung wird genutzt, um das Gas-Luft-Gemisch in die Brennräume des Gasmotors zu saugen. Um den Ansaugweg zu verkürzen und damit den Startvorgang zu beschleunigen, wird das Gas-Luft-Gemisch während des Startens über eine Bypassleitung, die an den Turboladern vorbeigeführt ist, angesaugt.

Ein Gasmotor (LPG engine), bei dem eine Drosselung die Gaszufuhr und das Mischverhältnis beeinflusst, ist aus JP S61 98955 A bekannt.

Weiterhin beschreibt DE 44 19 429 A1 ein Verfahren zur Optimierung des Betriebes eines Gemisch verdichtenden, aufgeladenen Gasmotors, der einen Hauptbrennraum und eine mit diesem verbundene Vorkammer aufweist. In die Vorkammer wird hochverdichteter, gasförmiger Brennstoff eingeblasen und dort zur Entzündung gebracht.

Eine Steuervorrichtung und ein Steuerverfahren für einen Verbrennungsmotor, die dazu dienen, vergleichsweise schnell verdampften Kraftstoff in die Zylinder des Verbrennungsmotors zu leiten und so die Startfähigkeit und das Emissionsverhalten des Verbrennungsmotors zu verbessern, wird in US 2011/0308500 A1 beschrieben.

EP 0 812 980 A2 beschreibt ein Kraftstoffsystem für Verbrennungsmotoren, bei dem der Zeitpunkt und die Kraftstoffmenge von Niederdruckquellen und Hochdruckquellen gesteuert werden, um insbesondere die Effizienz der Kraftstoffzufuhr zu verbessern.

Der Erfindung liegt die **Aufgabe** zugrunde, ein Verfahren und eine Vorrichtung zum Steuern eines Gasmotors anzugeben, die eine einfache Regelung des Gasmotors bei Betrieb mit niedriger Leistung, insbesondere in der Startphase, gewährleistet.

Die Aufgabe wird durch ein Verfahren nach Anspruch 1, eine Vorrichtung nach Anspruch 3 und einen Gasmotor nach Anspruch 9 **gelöst.** Bevorzugte Ausgestaltungen des Verfahrens und der Vorrichtung finden ihren Niederschlag in den Ansprüchen 2 und 4 bis 8.

Bei dem erfindungsgemäßen Verfahren zum Betreiben eines Gasmotors mit niedriger Leistung in der Startphase wird im Ansaugtrakt und in der Bypassleitung ein variabler Unterdruck vorgesehen. Der Gasmotor weist hierzu wenigstens einen Zylinder und eine Vorrichtung auf, die Treibstoffzuführungsleitungen, durch die der wenigstens eine Zylinder des Gasmotors mit einem Gas-Luft-Gemisch versorgt wird, einen Ansaugtrakt, der mit den Treibstoffzuführungsleitungen verbunden ist, eine Hauptleitung, die mit dem Ansaugtrakt verbunden ist und in der eine erste Absperreinrichtung zum Öffnen und Schließen des Ansaugtraktes angeordnet ist, und eine von der Hauptleitung abgezweigte Bypassleitung, die mit den Treibstoffzuführungsleitungen verbunden ist, umfasst. Die Treibstoffzuführungsleitungen, deren Querschnitte unterschiedlich sein können, können mit Mengeneinstellschrauben versehen sein. Die Hauptleitung weist eine zweite Absperreinrichtung zum Öffnen und Schließen der Hauptleitung auf, die in Strömungsrichtung vor der ersten Absperreinrichtung angeordnet ist, wobei die Luft zwischen der ersten Absperreinrichtung und der zweiten Absperreinrichtung dem Ansaugtrakt zugeführt wird. Das Gas wird in Strömungsrichtung vor der zweiten Absperreinrichtung der Hauptleitung zugeführt.

Bei dem Verfahren werden folgende Schritte ausgeführt: Die Ansaugkanäle werden mit Luft aus dem Ansaugtrakt und mit Gas aus der Bypassleitung versorgt, so dass sich das Gas-Luft-Gemisch bildet. Das Mischverhältnis des Gas-Luft-Gemisches wird durch die erste Absperreinrichtung geregelt.

Der Gasmotor wird bei diesem Betrieb somit nicht über die Hauptleitung mit dem Gas-Luft-Gemisch versorgt, sondern mit Luft aus dem Ansaugtrakt und Gas aus der Bypassleitung. Die Gemischbildung erfolgt direkt in den Ansaugkanälen der einzelnen Zylinder. Das Mischverhältnis des Gas-Luft-Gemisches in den Ansaugkanälen wird durch die regelbare erste Absperreinrichtung im Ansaugtrakt geregelt. Durch veränderbare Drosselung der Luftzufuhr durch die erste Absperreinrichtung entsteht im Ansaugkrümmer ein veränderbarer Unterdruck und somit eine veränderbare Gaszufuhr in den Ansaugkanälen der Zylinder. Das Mischverhältnis des Gas-Luft-Gemisches lässt sich so exakt steuern. Somit wird die Gaszufuhr in der Bypassleitung und die Luftzufuhr im Absaugtrakt variabel gehalten und damit das Mischverhältnis des Gas-Luft-Gemisches durch eine Drosselung der Luftzufuhr gesteuert.

Durch Ausnutzung der Saugwirkung des Gasmotors, die beim Andrehen des Gasmotors durch einen Anlasser bis zu einer Leistung von etwa 50% der Nennleistung vorhanden ist, kann auf eine Druckaufladung des Gases verzichtet werden. Durch den Unterdruck im Ansaugkrümmer wird Gas aus der Bypassleitung und Luft aus dem Ansaugtrakt in die Ansaugkanäle angesaugt. Ein Kompressor zur Druckaufladung in der Bypassleitung wird deshalb nicht benötigt.

Die zweite Absperreinrichtung umfasst vorzugsweise einen Lambdaregler. Beim Betreiben des Gasmotors mit niedriger Leistung, insbesondere in der Startphase, verschließt die zweite Absperreinrichtung die Hauptleitung durchgehend. Somit gelangt kein Gas, das vor der zweiten Absperreinrichtung in die Hauptleitung zugeführt wird, in den Ansaugtrakt. Das Gas wird deshalb ausschließlich durch die Bypassleitung in Richtung des Gasmotors geleitet. Da die Luft in Strömungsrichtung hinter der zweiten Absperreinrichtung dem Ansaugtrakt zugeführt wird, wird die Luft durch den Ansaugtrakt zu den Ansaugkanälen geleitet. Erst mit zunehmender Leistung wird kontinuierlich die zweite Absperreinrichtung geöffnet, und es gelangt zusätzlich Gas in den Ansaugkrümmer.

In einer bevorzugten Ausgestaltung des Verfahrens weist die Bypassleitung eine dritte Absperreinrichtung zum Öffnen und Schließen der Bypassleitung auf. Das Verfahren umfasst die folgenden Schritte:
Der Gasmotor wird bei geschlossener zweiter Absperreinrichtung, geöffneter dritten Absperreinrichtung und weitgehend geschlossener erster Absperreinrichtung angelassen;
Öffnen der ersten Absperreinrichtung in eine Offenstellung;
Durchführen einer invertierten Leistungsregelung unter Verwendung der ersten Absperreinrichtung bis der Gasmotor eine vorbestimmte Drehzahl beziehungsweise Leistung erreicht;
Öffnen der zweiten Absperreinrichtung der Hauptleitung;
Schließen der dritten Absperreinrichtung der Bypassleitung.

Zum Starten des Gasmotors ist die zweite Absperreinrichtung geschlossen und die dritte Absperreinrichtung, die vorteilhafterweise ein Steuerventil ist, geöffnet. Die erste Absperreinrichtung ist nahezu geschlossen. Durch das Anlassen des Gasmotors wird der Gasmotor auf ungefähr 150 bis 200 Umdrehungen pro Minute beschleunigt. Die daraus entstehende Ansaugkraft des Gasmotors sorgt dafür, dass Gas über die geöffnete dritte Absperreinrichtung durch die Bypassleitung und die Treibstoffzuführungsleitungen in die Ansaugkanäle gesaugt wird. Gleichzeitig wird über die minimal geöffnete erste Absperreinrichtung Luft durch den Ansaugtrakt in die Ansaugkanäle gesaugt. Das Gas-Luft-Gemisch weist demnach einen vergleichsweise hohen Gasanteil und einen vergleichsweise niedrigen Luftanteil auf und wird somit als fett bezeichnet. Ein solch fettes Gas-Luft-Gemisch kann in den Zylindern des Gasmotors in der Regel nicht gezündet werden.

Die erste Absperreinrichtung wird in eine Offenstellung geöffnet. Die Offenstellung entspricht vorzugsweise mindestens 50% des maximalen Öffnungswinkels der ersten Absperreinrichtung. Die Öffnung findet in einem Zeitraum von weniger als 10 s, vorzugsweise weniger als 5 s, weiter vorzugsweise weniger als 2 s und weiter vorzugsweise von etwa 1 s oder weniger als 1 s statt. Durch das Öffnen der ersten Absperreinrichtung steigt der Luftvolumenstrom im Ansaugtrakt an. Das Gas-Luft-Gemisch durchläuft vergleichsweise schnell Mischverhältnisse von fett bis mager. Dabei ist es bereits möglich, dass zwischenzeitlich ein ideales Gas-Luft-Gemisch zum Zünden in den Zylindern des Gasmotors vorliegt und Zündungen stattfinden. Allerdings herrscht durch das abrupte Öffnen der ersten Absperreinrichtung schon kurz danach ein zu mageres Gas-Luft-Gemisch in den Zylindern, weshalb keine weitere Zündung mehr stattfindet. Dieses Verhalten wird als "Verschlucken" des Motors bezeichnet. Ausgehend von dem nun herrschenden mageren Gas-Luft-Gemisch wird die Öffnung der ersten Absperreinrichtung durch die Regelung verkleinert, um ein fetteres Gas-Luft-Gemisch in den Zylindern zu erreichen, welches zündfähig ist. Je mehr die erste Absperreinrichtung ausgehend von der Offenstellung geschlossen wird, desto geringer wird der Luftanteil des Gas-Luft-Gemisches.

Üblicherweise wird bei Gasmotoren die Erhöhung der Leistung durch Öffnung der Drosselklappe erreicht. Durch das vorherige Öffnen der ersten Absperreinrichtung in die Offenstellung, das zu dem genannten "Verschlucken" des Motors führt, ist es möglich, aus dem zu mageren Gas-Luft-Gemisch durch das durch diese "invertierte Regelung" verursachte Schließen der ersten Absperreinrichtung das Gas-Luft-Gemisch zu einem fetteren Gemisch zu regeln. Bei der invertierten Regelung wird das Prinzip, bei dem eine Öffnung der ersten Absperreinrichtung eine Leistungserhöhung bewirken soll, umgedreht. Denn durch ein kontrolliertes Schließen der ersten Absperreinrichtung verringert sich der Luftvolumenstrom im Ansaugtrakt. Durch den am Motor anliegenden Unterdruck wird auf diese Weise mehr Gas aus der Bypassleitung zugeführt. Diese Art der Regelung hat sich als besonders zuverlässig beim Start und im niedrigen Teillastbereich erwiesen.

Gewöhnlich wird bei Gasmotoren zum Zünden ausgehend von einem fetten Gas-Luft-Gemisch hin zu einem mageren Gas-Luft-Gemisch geregelt. Durch das zu vorige Öffnen der ersten Absperreinrichtung in die Offenstellung, was zu einem "Verschlucken" des Motors führt, ist die invertierte Leistungsregelung möglich, bei der von einem mageren Gas-Luft-Gemisch zu einem fetteren Gas-Luft-Gemisch geregelt wird. Diese Art von Regelung in Kombination mit dem "Verschlucken" des Gasmotors hat sich als besonders einfach zu regeln herausgestellt.

Durch das Regeln der ersten Absperreinrichtung steigt die Drehzahl und somit die Leistung des Gasmotors. Die erste Absperreinrichtung wird solange geregelt bis sich eine stabile Drehzahl des Gasmotors einstellt. Sobald ein vorher festgelegter Grenzwert für die Drehzahl erreicht und der Generator mit dem Netz gekoppelt ist, wird das Mischverhältnis des Gas-Luft-Gemisches durch einen Leistungsregler gesteuert, der die Steuerung der ersten Absperreinrichtung übernimmt. Durch ein Verkleinern der Öffnung der ersten Absperreinrichtung wird das Mischverhältnis des Gas-Luft-Gemisches fetter und die Leistung des Gasmotors steigt an. Durch ein Vergrößern der Öffnung der ersten Absperreinrichtung wird das Mischverhältnis des Gas-Luft-Gemisches magerer und die Leistung des Gasmotors fällt, bis hin zu Leistungseinbrüchen und Zündaussetzern.

Vorzugsweise wird die Drehzahl des Gasmotors auf ca. 1500 Umdrehungen pro Minute eingestellt, wenn ein vierpoliger Generator Verwendung findet. Nach elektrischer Koppelung des Generators mit dem Netz wird mittels invertierter Regelung die Leistung des Gasmotors ständig angehoben und während dieses Vorgangs die zweite Absperreinrichtung der Hauptleitung geöffnet und mit steigender Leistung des Gasmotors kontinuierlich mehr Gas dem Motor zugeführt. Bei etwa 50 % der Nennleistung des Motors ist die erste Absperreinrichtung so weit geöffnet, dass zwischen Ansaugkrümmer und Ansaugtrakt Druckausgleich besteht und folglich kein Gas mehr über die Bypassleitung den Treibstoffzuführungsleitungen zugeführt wird. Noch bevor im Ansaugkrümmer ein Überdruck, der durch den Turbolader hervorgerufen wird, entsteht, wird die dritte Absperreinrichtung geschlossen. Die Umschaltung der Gaszufuhr von der Bypassleitung zur Hauptleitung erfolgt bei Druckausgleich zwischen Bypassleitung und Ansaugkrümmer. Es kommt zu keinerlei nennenswerten Drehzahl- und Leistungsschwankungen.

Die erfindungsgemäße Vorrichtung zur Durchführung des Verfahrens umfasst wenigstens eine Treibstoffzuführungsleitung, durch die wenigstens ein Zylinder des Gasmotors mit einem Gas-Luft-Gemisch versorgt wird, einen Ansaugtrakt, der mit der wenigstens einen Treibstoffzuführungsleitung verbunden ist, eine Hauptleitung, die mit dem Ansaugtrakt verbunden ist und in der eine erste Absperreinrichtung angeordnet ist, und eine von der Hauptleitung abgezweigte Bypassleitung, die mit der wenigstens einen Treibstoffzuführungsleitung verbunden ist. Die Vorrichtung umfasst ferner eine zweite Absperreinrichtung, die in Strömungsrichtung vor der ersten Absperreinrichtung angeordnet ist, und eine Luftzufuhrleitung, die zwischen der ersten Absperreinrichtung und der zweiten Absperreinrichtung mit dem Ansaugtrakt verbunden ist. Die Vorrichtung umfasst eine Gasleitung, die in Strömungsrichtung vor der zweiten Absperreinrichtung mit der Hauptleitung verbunden ist.

In einer bevorzugten Ausgestaltung umfasst die Bypassleitung eine dritte Absperreinrichtung.

Die beschriebene invertierte Regelung ist nicht auf einen Gasmotor der eingangs genannten Art beschränkt. Vielmehr wird bei jedem Gasmotor, der mit einem Ansaugtrakt und einer Absperreinrichtung zum Drosseln des Luftvolumenstroms vor dem Ansaugtrakt versehen ist, der Luftvolumenstrom im Ansaugtrakt vor der Vermischung von Gas und Luft in dem Gasmischer oder, insbesondere bei Direkteindüsung des Gases, in den Ansaugkanälen gedrosselt. Durch die invertiere Regelung, bei der im Ansaugkrümmer ein Unterdruck herrscht, wird die Verbrennungsleistung derart geregelt, dass ein Vergrößern einer Öffnung der Absperreinrichtung eine Verringerung der Leistung des Gasmotors bewirkt. Eine Verkleinerung der Öffnung der Absperreinrichtung bewirkt eine Steigerung der Leistung des Gasmotors durch eine sich automatisch einstellende, resultierende relative Erhöhung des Brennstoffvolumenstroms.

Ein Ausführungsbeispiel der Erfindung wird im Folgenden anhand der beigefügten Zeichnungen näher erläutert. Darin zeigt:
- Fig. 1: ein schematisches Schaltbild der Vorrichtung für den Betrieb eines Gasmotors;
- Fig. 2a: ein Diagramm des Gasvolumenstroms über die Zeit beim Starten des Gasmotors;
- Fig. 2b: ein Diagramm des Luftvolumenstroms über die Zeit beim Starten des Gasmotors und
- Fig. 3: ein schematisches Schaltbild einer weiteren Ausführungsform der Vorrichtung für den Betrieb eines Gasmotors.

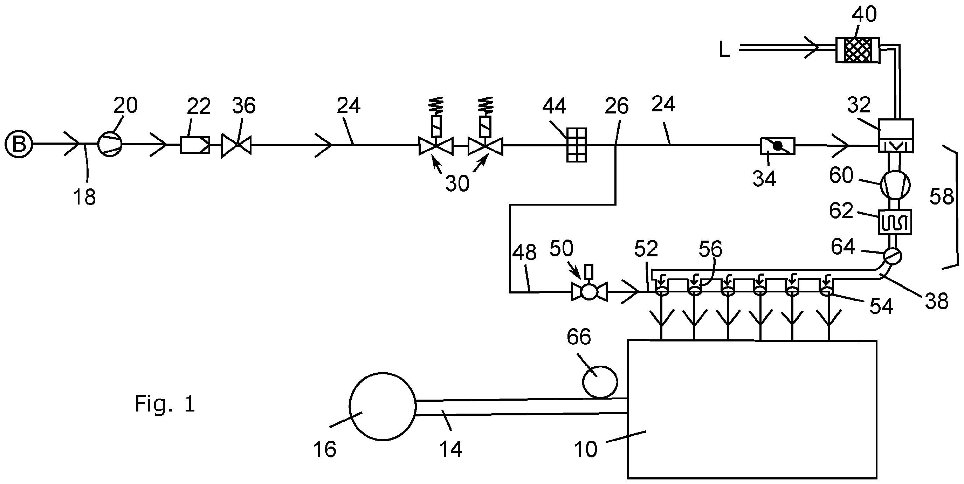

Fig. 1 zeigt eine Vorrichtung zum Betreiben eines nach dem Ottoverfahren arbeitenden Gasmotors 10, der hier beispielsweise sechs Zylinder (nicht gezeigt) aufweist. Die einzelnen Zylinder werden mit Gas B und Luft L versorgt. Der Gasmotor 10 treibt über eine Welle 14 einen Generator 16 an.

Die Vorrichtung umfasst eine Hauptleitung 24, eine Gasleitung 18, eine Luftzufuhrleitung und eine Bypassleitung 48. Die Gasleitung 18 speist das Gas B über einen Verdichter 20, einen Gasfilter 22 und einen Druckregler 36 in die Hauptleitung 24. Die Hauptleitung 24, die als Betriebsregelstrecke wirkt, führt über zwei Hauptventile 30 zu einem Gasmischer 32, vor dem sich in der Hauptleitung 24 eine zweite Absperreinrichtung 34, die als Gemischregler ausgebildet ist, mit einer nicht weiter dargestellten Lambdasonde befindet. Im Punkt 26 zweiget von der Hauptleitung 24 eine Bypassleitung 48 ab, die das Gas B zu den Treibstoffzuführungsleitungen 54 führt.

In der Betriebsphase strömt über die geöffneten Hauptventile 30 Gas B in den Gasmischer 32, in dem es mit der von einem Luftfilter 40 angesaugten Luft L gemischt wird. Das Gas-Luft-Gemisch gelangt über einen Abgas-Turbolader 60, einen Kühler 62 und eine erste Absperreinrichtung 64 für die Leistungsregelung, die als Drosselklappe ausgebildet ist, in einen Ansaugkrümmer 38 des Gasmotors 10.

Gasmischer 32, Turbolader 60, Kühler 62 und die erste Absperreinrichtung 64 bilden einen Ansaugtrakt 58, durch den bei Betrieb mit niedriger Leistung, insbesondere in der Startphase, das heißt bei geschlossener zweiter Absperreinrichtung 34, nur Luft L zum Ansaugkrümmer 38 gelangt. Von diesem zweigt zu jedem Zylinder des Motors 10 ein Ansaugkanal 56 ab, in den eine relativ dünne Treibstoffzuführungsleitung 54 mündet, die bei Betrieb mit niedriger Leistung, insbesondere in der Startphase, das heißt bei geöffneter dritter Absperreinrichtung 50, von einem gemeinsamen Verteilerkanal 52 mit Gas B versorgt wird. Hinter den Hauptventilen 30 befindet sich eine Flammenrückschlagsicherung 44.

Zum Starten des Gasmotors 10 ist die zweite Absperreinrichtung 34 geschlossen und die dritte Absperreinrichtung 50 geöffnet. Die erste Absperreinrichtung 64 ist nahezu geschlossen. Durch das Anlassen des Gasmotors 10 wird der Gasmotor 10 auf ungefähr 150 bis 200 Umdrehungen pro Minute beschleunigt. Die daraus entstehende Ansaugkraft des Gasmotors 10 sorgt dafür, dass Gas B über die geöffnete dritte Absperreinrichtung 50 durch die Bypassleitung 48 und die Treibstoffzuführungsleitungen 54 in den oder die Ansaugkanäle 56 gesaugt wird. Gleichzeitig wird über die minimal geöffnete erste Absperreinrichtung 64 Luft L durch den Ansaugtrakt 58 in die Ansaugkanäle 56 gesaugt. Das Gas-Luft-Gemisch weist demnach einen vergleichsweise hohen Gasanteil und einen vergleichsweise niedrigen Luftanteil auf und wird somit als fett bezeichnet. Ein solches fettes Gas-Luft-Gemisch kann in den Zylindern des Gasmotors 10 in der Regel nicht gezündet werden.

Die erste Absperreinrichtung 64 wird in eine Offenstellung geöffnet. Die Offenstellung entspricht vorzugsweise mindestens 50% des maximalen Öffnungswinkels. Das Öffnen findet in einem Zeitraum von etwa 1 s oder weniger statt. Durch das Öffnen der ersten Absperreinrichtung 64 steigt der Luftvolumenstrom an. Das Gas-Luft-Gemisch durchläuft vergleichsweise schnell Mischverhältnisse von fett bis mager. Dies führt zu einem sogenannten "Verschlucken" des Gasmotors 10. Ausgehend von dem nun herrschenden mageren Gas-Luft-Gemisch wird die erste Absperreinrichtung 64 geregelt, um ein fetteres Gas-Luft-Gemisch in den Zylindern zu erreichen, welches zündungsfähig ist.

Je mehr die erste Absperreinrichtung 64 ausgehend von der Offenstellung geschlossen wird, desto geringer wird der Luftanteil des Gas-Luft-Gemisches. Durch die invertierte Leistungsregelung der ersten Absperreinrichtung 64 steigt die Drehzahl und somit die Leistung des Gasmotors 10 an. Die erste Absperreinrichtung 64 wird solange geregelt bis sich eine stabile Drehzahl des Gasmotors 10 einstellt.

Sobald ein vorher festgelegter Grenzwert für die Drehzahl erreicht ist und der Generator beispielsweise mit einem Energieversorgungsnetz gekoppelt ist, wird das Mischverhältnis des Gas-Luft-Gemisches durch einen Leistungsregler gesteuert, der die Steuerung der ersten Absperreinrichtung 64 übernimmt. Durch ein Verkleinern der Öffnung der ersten Absperreinrichtung 64 wird das Mischverhältnis des Gas-Luft-Gemisches fetter und die Leistung des Gasmotors 10 steigt an. Durch ein Vergrößern der Öffnung der ersten Absperreinrichtung 64 wird das Mischverhältnis des Gas-Luft-Gemisches magerer und die Leistung des Gasmotors 10 fällt, bis hin zu Leistungseinbrüchen und Zündaussetzern.

Die Drehzahl des Gasmotors 10 wird von dem Leistungsregler auf beispielsweise ca.1500 Umdrehungen pro Minute eingestellt, wenn etwa ein vierpoliger Generator Anwendung findet.

Nach elektrischer Koppelung des Generators 16 mit dem Energieversorgungsnetz wird mittels invertierter Regelung die Leistung des Gasmotors 10 ständig angehoben bis der Abgas-Turbolader 60 einen derart hohen Ladedruck erzeugt hat, dass der Unterdruck im Ansaugkrümmer 38 und im Verteilerkanal 52 in einen Überdruck übergeht. In diese Übergangsphase wird die dritte Absperreinrichtung 50 geschlossen. Da die Hauptventile 30 bereits beim Starten geöffnet sind und die zweite Absperreinrichtung 34 kontinuierlich mit zunehmender Leistungssteigerung geöffnet wird, erhöht sich die Gaszufuhr in dem Ansaugtrakt 58, da auch Gas B durch die Hauptleitung 24 nachströmt. Es kommt zu keinerlei nennenswerten Drehzahl- und Leistungsschwankungen.

Durch den durch den Abgas-Turbolader 60 zur Verfügung gestellten Ladedruck bewegt sich der Gasmotor 10 von einem saugenden in einen geladenen Betrieb. Es wird folglich kein Gas B mehr aus der Bypassleitung 48 in den Gasmotor 10 gesaugt. Der Gasvolumenstrom in der Bypassleitung 48 wird demnach null. Die dritte Absperreinrichtung 50 wird geschlossen, um die Bypassleitung 48 zu schließen. Nach dieser Übergangsphase wird über die dritte Absperreinrichtung 50 die Bypassleitung 48 geschlossen, so dass der Ansaugkrümmer 38 des Gasmotors 10 über den zentralen Ansaugtrakt 58 das von dem Gasmischer 32 zugeführte Gas-Luft-Gemisch erhält.

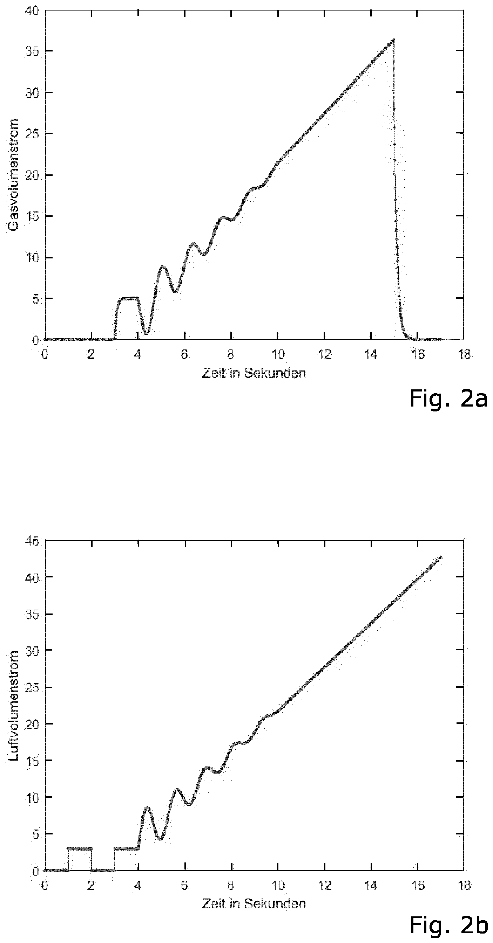

Fig. 2a zeigt ein Diagramm des Gasvolumenstroms sowohl in der Hauptleitung 24 als auch in der Bypassleitung 48 über die Zeit, wobei Fig. 2b ein Diagramm des Luftvolumenstroms im Ansaugtrakt 58 über die Zeit zeigt. Zwischen Sekunde 0 und 3 werden die Ansaugkanäle 56 mit Luft gespült. Der Luftvolumenstrom ist deshalb zwischen Sekunde 1 und 2 erhöht. Der Gasvolumenstrom bleibt in diesem Zeitraum konstant bei null. Beim Anlassen des Gasmotors 10 ab Sekunde 3 durch den Anlasser 66 ist die Hauptleitung 24 durch die zweite Absperreinrichtung 34 verschlossen. Demnach zieht der Gasmotor 10 Gas B ausschließlich durch die Bypassleitung 48, in der sich ein kleiner Gasvolumenstrom aufbaut. Die erste Absperreinrichtung 64 ist leicht geöffnet, wodurch der Gasmotor 10 Luft L durch den Ansaugtrakt 58 zieht. Es baut sich somit ein kleiner Luftvolumenstrom im Ansaugtrakt 58 auf. Zu diesem Zeitpunkt dreht der Gasmotor 10 durch den Anlasser 66 mit 150 bis 200 Umdrehungen pro Minute. Das Gas-Luft-Gemisch in den Ansaugkanälen 56 ist sehr fett und kann in den Zylindern des Gasmotors 10 nicht gezündet werden.

In einem weiteren Schritt ab Sekunde 4 wird die Öffnung der ersten Absperreinrichtung 64 in eine Offenstellung geöffnet. Der Luftvolumenstrom im Ansaugtrakt 58 steigt abrupt an und das Gas-Luft-Gemisch in den Ansaugkanälen 56 durchfährt Mischungen von fett bis mager. Bis zu einer ersten Zündung des Gasmotors 10 ist die Summe aus Luftvolumenstrom und Gasvolumenstrom durch die Leistung des Anlassers 66 begrenzt. Ein Vergrößern des Luftvolumenstroms im Ansaugtrakt 58 führt demnach zu einem Absinken des Gasvolumenstroms in der Bypassleitung 48.

Von Sekunde 4 bis Sekunde 10 wird die erste Absperreinrichtung 64 solange geregelt, bis sich eine konstante Drehzahl des Gasmotors 10 einstellt. Der Luftvolumenstrom im Ansaugtrakt 58 steigt an, weist aber ein Einschwingverhalten entsprechend eines PT2-Glieds auf. Im Drehzahlregelungsverlauf der ersten Absperreinrichtung 64 steigt auch der Gasvolumenstrom in der Bypassleitung 48 an. Das Einschwingverhalten des Luftvolumenstroms im Ansaugtrakt 58 beeinflusst direkt den Gasvolumenstrom in der Bypassleitung 48.

Sowohl der Luftvolumenstrom im Ansaugtrakt 58 als auch der Gasvolumenstrom in der Bypassleitung 48 erhöhen sich stetig während des Regeln des ersten Absperreinrichtung 64 durch die stetig steigende Drehzahl und somit die Ansaugwirkung des Gasmotors 10. Jedoch führt jede zusätzliche Erhöhung des Luftvolumenstroms im Ansaugtrakt 58 durch das Öffnen der ersten Absperreinrichtung 64 während des Regelns zu einem Abfallen des Gasvolumenstroms in der Bypassleitung 48. Demgegenüber führt jedes Abfallen des Luftvolumenstroms im Ansaugtrakt 58 durch das Schließen der ersten Absperreinrichtung 64 während des Regelns zu einem Erhöhen des Gasvolumenstroms in der Bypassleitung 48. Somit verhält sich der Regelanteil des Luftvolumenstroms im Ansaugtrakt 58 umgekehrt proportional zu dem Gasvolumenstrom in der Bypassleitung 48.

Ab Sekunde 10 hat sich eine lineare Leistungssteigerung des Gasmotors 10 eingestellt, und der Leistungsregler regelt die Öffnung der ersten Absperreinrichtung 64, um die Leistung des Gasmotors 10 weiter in Richtung Nennleistung zu erhöhen.

Bei einer Leistung des Gasmotors 10 von etwa 50% der Nennleistung des Gasmotors 10 erreicht der in dem Ansaugtrakt 58 angeordnete Abgas-Turbolader 60 einen derart hohen Ladedruck, dass der Unterdruck im Ansaugkrümmer 38 und der Bypassleitung 48 in einen Überdruck übergeht. Durch den durch den Abgas-Turbolader 60 zur Verfügung gestellten Ladedruck bewegt sich der Gasmotor 10 von einem saugenden in einen aufgeladenen Betrieb. Folglich wird immer weniger Gas B aus der Bypassleitung 48 in den Gasmotor 10 gesaugt. Der Gasvolumenstrom in der Bypassleitung 48 fällt demnach ab. Die Leistung des Gasmotors 10 steigt weiter in Richtung der Nennleistung, weshalb der Gasdruck im Ansaugkrümmer 38 stärker steigt, als der Gasdruck in der Bypassleitung 48 abfällt. Der Luftvolumenstrom im Ansaugtrakt 58 steigt ebenfalls weiter an. Sobald der Gasvolumenstrom in der Bypassleitung 48 vollständig abgefallen ist, wird die dritte Absperreinrichtung 50 geschlossen. Der Gasvolumenstrom und der Luftvolumenstrom in der Hauptleitung beziehungsweise im Ansaugtrakt 58 steigen dann solange weiter an, bis der Gasmotor 10 seine Nennleistung erreicht hat.

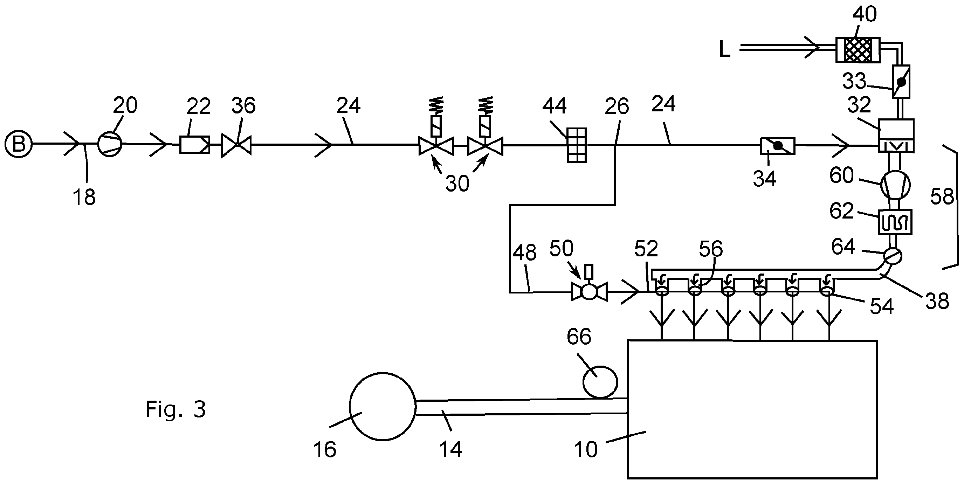

Fig. 3 zeigt den Gasmotor 10 aus Fig. 1 mit dem Unterschied, dass zwischen dem Luftfilter 40 und dem Gasmischer 32 eine vierte Absperreinrichtung 33 vorgesehen ist. Vor einer Vermischung von Gas B und Luft L in dem hierfür vorgesehenen Gasmischer 32 im Ansaugtrakt 58 wird der Luftvolumenstrom so gedrosselt, dass durch eine invertierte Regelung die Verbrennungsleistung des Gasmotors 10 so geregelt wird, dass durch eine größere Öffnung der vierten Absperreinrichtung 33 oder der ersten Absperreinrichtung 64 eine Verringerung der Leistung, sowie durch eine kleinere Öffnung der vierten Absperreinrichtung 33 oder der ersten Absperreinrichtung 64 eine Steigerung durch eine sich automatisch einstellende, resultierende relative Erhöhung des Brennstoffvolumenstroms erreicht wird.

### Bezugszeichenliste

- 10: Gasmotor
- 14: Welle
- 16: Generator
- 18: Gasleitung
- 20: Verdichter
- 22: Gasfilter
- 24: Hauptleitung
- 26: Punkt
- 30: Hauptventil
- 32: Gasmischer
- 33: vierte Absperreinrichtung
- 34: zweite Absperreinrichtung
- 36: Druckregler
- 38: Ansaugkrümmer
- 40: Luftfilter
- 42: Ansaugkanäle
- 44: Flammenrückschlagsicherung
- 48: Bypassleitung
- 50: dritte Absperreinrichtung
- 52: Verteilerkanal
- 54: Treibstoffzuführungsleitungen
- 56: Ansaugkanal
- 58: Ansaugtrakt
- 60: Abgas-Turbolader
- 62: Kühler
- 64: erste Absperreinrichtung
- 66: Anlasser
- B: Gas
- L: Luft

## Patentansprüche

1. Verfahren zum Regeln eines Gasmotors (10) bei Betrieb mit niedriger Leistung;
wobei der Gasmotor (10) wenigstens einen Zylinder und eine Vorrichtung aufweist;
wobei die Vorrichtung umfasst:
einen Ansaugkrümmer (38), von dem ein Ansaugkanal (56) zu dem wenigstens einen Zylinder führt;
wenigstens eine Treibstoffzuführungsleitung (54), die in den Ansaugkanal (56) mündet;
einen Ansaugtrakt (58), der eine erste Absperreinrichtung (64) umfasst und mit dem Ansaugkrümmer (38) verbunden ist;
eine Hauptleitung (24), die mit dem Ansaugtrakt (58) verbunden und in der eine zweite Absperreinrichtung (34) angeordnet ist;
eine von der Hauptleitung (24) in Strömungsrichtung vor der zweiten Absperreinrichtung (34) abgezweigte Bypassleitung (48), die mit der Treibstoffzuführungsleitung (54) verbunden ist;
eine die Hauptleitung (24) mit Gas (B) versorgende Gasleitung (18) und
eine den Ansaugtrakt (58) mit Luft (L) versorgende Luftzufuhrleitung, die in Strömungsrichtung zwischen der zweiten Absperreinrichtung (34) und der ersten Absperreinrichtung (64) angeordnet ist, und
wobei das Verfahren die folgenden Schritte umfasst:
in der Startphase wird die zweite Absperreinrichtung (34) geschlossen, so dass die Treibstoffzuführungsleitung (54) mit Gas (B) aus der Bypassleitung (48) und der Ansaugkrümmer (38) mit Luft (L) aus dem Ansaugtrakt (58) versorgt und in dem Ansaugkanal (56) ein Gas-Luft-Gemisch gebildet wird;
das Mischverhältnis des Gas-Luft-Gemisches in dem Ansaugkanal (56) wird durch die erste Absperreinrichtung (64) derart geregelt, dass durch eine Drosselung der Zufuhr an Luft (L) ein veränderbarer Unterdruck im Ansaugkrümmer (38) entsteht, durch den die Zufuhr an Gas (B) aus der Bypassleitung (48) gesteuert wird.

2. Verfahren nach Anspruch 1, wobei die Vorrichtung eine dritte Absperreinrichtung (50), die in der Bypassleitung (48) angeordnet ist, umfasst und
wobei das Verfahren die folgenden Schritte umfasst:
a) Anlassen des Gasmotors (10) bei geschlossener zweiter Absperreinrichtung (34), geöffneter dritter Absperreinrichtung (50) und weitgehend geschlossener erster Absperreinrichtung (64), so dass Luft (L) aufgrund der minimal geöffneten ersten Absperreinrichtung (64) durch den Ansaugtrakt (58) und Gas (B) aufgrund der geöffneten dritten Absperreinrichtung (50) durch die Bypassleitung (48) in den Ansaugkanal (56) gesaugt werden und sich ein fettes Gas-Luft-Gemisch, das einen vergleichsweise hohen Gasanteil und einen vergleichsweise niedrigen Luftanteil aufweist, in dem Ansaugkanal (56) bildet;
b) Öffnen der ersten Absperreinrichtung (64) in eine Offenstellung, die vorzugsweise wenigstens 50 % des maximalen Öffnungswinkels der ersten Absperreinrichtung (64) beträgt, für eine vorbestimmte Zeitdauer, die vorzugsweise weniger als 10 s beträgt, so dass der Luftvolumenstrom im Ansaugtrakt (58) ansteigt und sich das Gas-Luft-Gemisch in dem Ansaugkanal (56) vergleichsweise schnell von fett nach mager verändert;
c) Reduzieren der Öffnung der ersten Absperreinrichtung (64) derart, dass sich der Luftvolumenstrom im Ansaugtrakt (58) verringert und sich damit das Gas-Luft-Gemisch in dem Ansaugkanal (56) von mager nach fett verändert bis sich ein zündfähiges Gas-Luft-Gemisch in dem Ansaugkanal (56) ergibt;
d) Fortsetzen dieser invertierten Regelung der ersten Absperreinrichtung (64) bis der Gasmotor (10) eine vorbestimmte Drehzahl erreicht;
e) Öffnen der zweiten Absperreinrichtung (34), so dass Gas (B) aus der Hauptleitung (24) dem Ansaugtrakt (58) zugeführt und die Leistung des Gasmotors (10) gesteigert wird;
f) Schließen der dritten Absperreinrichtung (50), wenn zwischen dem Ansaugtrakt (58) und dem Ansaugkrümmer (38) ein Druckausgleich erreicht worden ist.

3. Vorrichtung zum Durchführen des Verfahrens nach Anspruch 1 oder 2, umfassend:
einen Ansaugkrümmer (38), von dem ein Ansaugkanal (56) zu wenigstens einem Zylinder eines Gasmotors (10) führt;
wenigstens eine Treibstoffzuführungsleitung (54), die in den Ansaugkanal (56) mündet;
einen Ansaugtrakt (58), der eine erste Absperreinrichtung (64) umfasst und mit dem Ansaugkrümmer (38) verbunden ist;
eine Hauptleitung (24), die mit dem Ansaugtrakt (58) verbunden und in der eine zweite Absperreinrichtung (34) angeordnet ist;
eine von der Hauptleitung (24) in Strömungsrichtung vor der zweiten Absperreinrichtung (34) abgezweigte Bypassleitung (48), die mit der Treibstoffzuführungsleitung (54) verbunden ist;
eine die Hauptleitung (24) mit Gas (B) versorgende Gasleitung (18) und
eine den Ansaugtrakt (58) mit Luft (L) versorgende Luftzufuhrleitung, die in Strömungsrichtung zwischen der zweiten Absperreinrichtung (34) und der ersten Absperreinrichtung (64) angeordnet ist;
wobei in der Startphase die zweite Absperreinrichtung (34) geschlossen wird, so dass die Treibstoffzuführungsleitung (54) mit Gas (B) aus der Bypassleitung (48) und der Ansaugkrümmer (38) mit Luft (L) aus dem Ansaugtrakt (58) versorgt und in dem Ansaugkanal (56) ein Gas-Luft-Gemisch gebildet wird, und
wobei das Mischverhältnis des Gas-Luft-Gemisches in dem Ansaugkanal (56) durch die erste Absperreinrichtung (64) derart geregelt wird, dass durch eine Drosselung der Zufuhr an Luft (L) ein veränderbarer Unterdruck im Ansaugkrümmer (38) entsteht, durch den die Zufuhr an Gas (B) aus der Bypassleitung (48) gesteuert wird.

4. Vorrichtung nach Anspruch 3, **gekennzeichnet durch** eine dritte Absperreinrichtung (50), die in der Bypassleitung (48) angeordnet ist.

5. Vorrichtung nach Anspruch 3 oder 4, **gekennzeichnet durch** eine vierte Absperreinrichtung (33), die in der Luftzufuhrleitung angeordnet ist.

6. Vorrichtung nach einem der Ansprüche 3 bis 5, **dadurch gekennzeichnet, dass** die erste Absperreinrichtung (64) als Drosselklappe ausgebildet ist.

7. Vorrichtung nach einem der Ansprüche 3 bis 6, **dadurch gekennzeichnet, dass** die zweite Absperreinrichtung (34) als Gemischregler, insbesondere als Lambdaregler, ausgebildet ist.

8. Vorrichtung nach einem der Ansprüche 3 bis 7, **dadurch gekennzeichnet, dass** die dritte Absperreinrichtung (50) als Steuerventil ausgebildet ist.

9. Gasmotor **gekennzeichnet durch** eine Vorrichtung nach einem der Ansprüche 3 bis 8.

## Claims

1. Method for controlling a gas engine (10) during low power operation;
wherein the gas engine (10) comprises at least one cylinder and a device;
the device comprising:
an intake manifold (38) from which an intake duct (56) leads to the at least one cylinder;
at least one fuel supply line (54) opening into the intake duct (56);
an intake tract (58) comprising a first shut-off device (64) and connected to the intake manifold (38);
a main line (24) which is connected to the intake tract (58) and in which a second shut-off device (34) is arranged;
a bypass line (48) branched off from the main line (24) in the direction of flow upstream of the second shut-off device (34) and connected to the fuel supply line (54);
a gas line (18) supplying the main line (24) with gas (B); and
an air supply line supplying the intake tract (58) with air (L), which is arranged in the direction of flow between the second shut-off device (34) and the first shut-off device (64), and
the method comprising the following steps:
in the starting phase, the second shut-off device (34) is closed so that the fuel supply line (54) is supplied with gas (B) from the bypass line (48) and the intake manifold (38) is supplied with air (L) from the intake tract (58) and a gas-air mixture is formed in the intake duct (56);
the mixing ratio of the gas-air mixture in the intake duct (56) is controlled by the first shut-off device (64) in such a way that, by throttling the supply of air (L), a variable negative pressure is created in the intake manifold (38), by means of which the supply of gas (B) from the bypass line (48) is controlled.

2. The method according to claim 1, wherein the device comprises a third shut-off device (50) arranged in the bypass line (48), and
the method comprising the following steps:
a) starting the gas engine (10) with the second shut-off device (34) closed, the third shut-off device (50) open and the first shut-off device (64) largely closed, so that air (L) is sucked through the intake tract (58) due to the minimally opened first shut-off device (64) and gas (B) is sucked into the intake duct (56) due to the opened third shut-off device (50) through the bypass line (48) and a rich gas-air mixture having a comparatively high gas content and a comparatively low air content is formed in the intake duct (56);
b) opening the first shut-off device (64) into an open position, which is preferably at least 50% of the maximum opening angle of the first shut-off device (64), for a predetermined period of time, which is preferably less than 10 s, so that the air volume flow in the intake tract (58) increases and the gas-air mixture in the intake duct (56) changes comparatively quickly from rich to lean;
c) reducing the opening of the first shut-off device (64) in such a way that the air volume flow in the intake tract (58) is reduced and thus the gas-air mixture in the intake duct (56) changes from lean to rich until an ignitable gas-air mixture results in the intake duct (56);
d) continuing this inverted control of the first shut-off device (64) until the gas engine (10) reaches a predetermined speed;
e) opening the second shut-off device (34) so that gas (B) from the main line (24) is supplied to the intake tract (58) and the power of the gas engine (10) is increased;
f) closing the third shut-off device (50) when pressure equalisation has been achieved between the intake tract (58) and the intake manifold (38).

3. Apparatus for carrying out the method according to claim 1 or 2, comprising:
an intake manifold (38) from which an intake duct (56) leads to at least one cylinder of a gas engine (10);
at least one fuel supply line (54) opening into the intake duct (56);
an intake tract (58) comprising a first shut-off device (64) and connected to the intake manifold (38);
a main line (24) which is connected to the intake tract (58) and in which a second shut-off device (34) is arranged;
a bypass line (48) branched off from the main line (24) in the direction of flow upstream of the second shut-off device (34) and connected to the fuel supply line (54);
a gas line (18) supplying the main line (24) with gas (B); and
an air supply line supplying the intake tract (58) with air (L), which is arranged in the direction of flow between the second shut-off device (34) and the first shut-off device (64);
wherein in the starting phase the second shut-off device (34) is closed so that the fuel supply line (54) is supplied with gas (B) from the bypass line (48) and the intake manifold (38) is supplied with air (L) from the intake tract (58) and a gas-air mixture is formed in the intake duct (56), and
wherein the mixing ratio of the gas-air mixture in the intake duct (56) is controlled by the first shut-off device (64) in such a way that, by throttling the supply of air (L), a variable negative pressure is created in the intake manifold (38), by means of which the supply of gas (B) from the bypass line (48) is controlled.

4. Apparatus according to claim 3, **characterised by** a third shut-off device (50) arranged in the bypass line (48).

5. Apparatus according to claim 3 or 4, **characterised by** a fourth shut-off device (33) arranged in the air supply line.

6. Apparatus according to any one of claims 3 to 5, **characterised in that** the first shut-off device (64) is designed as a butterfly valve.

7. Apparatus according to any one of claims 3 to 6, **characterised in that** the second shut-off device (34) is designed as a mixture regulator, in particular as a lambda regulator.

8. Apparatus according to any one of claims 3 to 7, **characterised in that** the third shut-off device (50) is designed as a control valve.

9. A gas engine **characterised by** an apparatus according to any one of claims 3 to 8.

## Revendications

1. Procédé de régulation d'un moteur à gaz (10) en fonctionnement à faible puissance;
dans lequel le moteur à gaz (10) comprend au moins un cylindre et un dispositif;
le dispositif comprenant:
un collecteur d'admission (38), à partir duquel un canal d'aspiration (56) mène à l'au moins un cylindre;
au moins une conduite d'alimentation en carburant (54) qui débouche dans le canal d'aspiration (56);
un conduit d'admission (58) comprenant un premier dispositif d'arrêt (64) et relié au collecteur d'admission (38);
une conduite principale (24) qui est reliée à la conduite d'aspiration (58) et dans laquelle est disposé un deuxième dispositif d'arrêt (34);
une conduite de dérivation (48) dérivée de la conduite principale (24) dans le sens d'écoulement en amont du deuxième dispositif d'arrêt (34), qui est reliée à la conduite d'alimentation en carburant (54);
une conduite de gaz (18) alimentant la conduite principale (24) en gaz (B), et
une conduite d'alimentation en air alimentant le conduit d'aspiration (58) en air (L), qui est disposée dans le sens de l'écoulement entre le deuxième dispositif d'arrêt (34) et le premier dispositif d'arrêt (64), et
ledit procédé comprenant les étapes suivantes:
dans la phase de démarrage, le deuxième dispositif d'arrêt (34) est fermé, de sorte que la conduite d'alimentation en carburant (54) est alimentée en gaz (B) à partir de la conduite de dérivation (48) et le collecteur d'admission (38) est alimenté en air (L) à partir du conduit d'admission (58), et un mélange gaz/air est formé dans le canal d'aspiration (56);
le rapport de mélange du mélange gaz/air dans le canal d'aspiration (56) est réglé par le premier dispositif d'arrêt (64) de telle sorte que, par un étranglement de l'alimentation en air (L), il se forme une dépression variable dans le collecteur d'admission (38), par laquelle l'alimentation en gaz (B) provenant de la conduite de dérivation (48) est commandée.

2. Procédé selon la revendication 1, dans lequel le dispositif comprend un troisième dispositif d'arrêt (50) disposé dans la conduite de dérivation (48), et
ledit procédé comprenant les étapes suivantes:
a) démarrage du moteur à gaz (10) lorsque le deuxième dispositif d'arrêt (34) est fermé, le troisième dispositif d'arrêt (50) est ouvert et le premier dispositif d'arrêt (64) est sensiblement fermé, de sorte que de l'air (L), en raison du premier dispositif d'arrêt (64) ouvert au minimum, est aspiré à travers le conduit d'admission (58) et du gaz (B), en raison du troisième dispositif d'arrêt (50) ouvert, est aspiré à travers le conduit de dérivation (48) dans le canal d'admission (56) et un mélange gaz/air riche, qui présente une proportion de gaz relativement élevée et une proportion d'air relativement faible, se forme dans le canal d'aspiration (56);
b) l'ouverture du premier dispositif d'arrêt (64) dans une position ouverte, qui est de préférence d'au moins 50 % de l'angle d'ouverture maximal du premier dispositif d'arrêt (64), pendant une durée prédéterminée, qui est de préférence inférieure à 10 s, de sorte que le débit volumique d'air dans le conduit d'aspiration (58) augmente et que le mélange gaz-air dans le conduit d'aspiration (56) passe relativement rapidement de riche à pauvre ;
c) réduire l'ouverture du premier dispositif d'arrêt (64) de telle sorte que le débit volumique d'air dans le conduit d'admission (58) diminue et que le mélange gaz-air dans le conduit d'aspiration (56) passe ainsi de pauvre à riche jusqu'à ce qu'il en résulte un mélange gaz-air inflammable dans le conduit d'aspiration (56);
d) poursuivre cette régulation inversée du premier dispositif d'arrêt (64) jusqu'à ce que le moteur à gaz (10) atteigne une vitesse de rotation prédéterminée;
e) l'ouverture du deuxième dispositif d'arrêt (34), de sorte que du gaz (B) provenant de la conduite principale (24) est amené au conduit d'admission (58) et que la puissance du moteur à gaz (10) est augmentée;
f) fermeture du troisième dispositif d'arrêt (50) lorsqu'un équilibre de pression a été atteint entre le conduit d'admission (58) et le collecteur d'aspiration (38).

3. Dispositif pour la mise en oeuvre du procédé selon la revendication 1 ou 2, comprenant:
un collecteur d'admission (38), à partir duquel un canal d'aspiration (56) mène à au moins un cylindre d'un moteur à gaz (10);
au moins une conduite d'alimentation en carburant (54) qui débouche dans le canal d'aspiration (56);
un conduit d'admission (58) comprenant un premier dispositif d'arrêt (64) et relié au collecteur d'admission (38);
une conduite principale (24) qui est reliée à la conduite d'admission (58) et dans laquelle est disposé un deuxième dispositif d'arrêt (34);
une conduite de dérivation (48) dérivée de la conduite principale (24) dans le sens d'écoulement en amont du deuxième dispositif d'arrêt (34), qui est reliée à la conduite d'alimentation en carburant (54);
une conduite de gaz (18) alimentant la conduite principale (24) en gaz (B), et
une conduite d'alimentation en air alimentant le conduit d'alimentation (58) en air (L), qui est disposée dans le sens de l'écoulement entre le deuxième dispositif d'arrêt (34) et le premier dispositif d'arrêt (64);
dans lequel, dans la phase de démarrage, le deuxième dispositif d'arrêt (34) est fermé, de sorte que la conduite d'alimentation en carburant (54) est alimentée en gaz (B) provenant de la conduite de dérivation (48) et le collecteur d'admission (38) est alimenté en air (L) provenant du conduit d'admission (58), et un mélange gaz/air est formé dans le canal d'aspiration (56), et
le rapport de mélange du mélange gaz/air dans le canal d'aspiration (56) étant réglé par le premier dispositif d'arrêt (64) de telle sorte que, par un étranglement de l'alimentation en air (L), il se forme une dépression variable dans le coude d'aspiration (38), par laquelle l'alimentation en gaz (B) provenant de la conduite de dérivation (48) est commandée.

4. Dispositif selon la revendication 3, **caractérisé par** un troisième dispositif d'arrêt (50) disposé dans la conduite de dérivation (48).

5. Dispositif selon la revendication 3 ou 4, **caractérisé par** un quatrième dispositif d'arrêt (33) qui est disposé dans la conduite d'alimentation en air.

6. Dispositif selon l'une des revendications 3 à 5, **caractérisé en ce que** le premier dispositif d'arrêt (64) est réalisé sous la forme d'un clapet d'étranglement.

7. Dispositif selon l'une des revendications 3 à 6, **caractérisé en ce que** le deuxième dispositif d'arrêt (34) est conçu comme un régulateur de mélange, en particulier comme un régulateur lambda.

8. Dispositif selon l'une des revendications 3 à 7, **caractérisé en ce que** le troisième dispositif d'arrêt (50) est conçu comme une vanne de commande.

9. Moteur à gaz **caractérisé par** un dispositif selon l'une des revendications 3 à 8.
